(19) **Europäisches Patentamt / European Patent Office / Office européen des brevets**

(11) **EP 4 020 837 A1**

(12) **DEMANDE DE BREVET EUROPEEN**

(43) Date de publication:
**29.06.2022 Bulletin 2022/26**

(21) Numéro de dépôt: **21217260.5**

(22) Date de dépôt: **23.12.2021**

(51) Classification Internationale des Brevets (IPC):
***H04B 7/185*** (2006.01)

(52) Classification Coopérative des Brevets (CPC):
**H04B 7/1851**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.12.2020 FR 2014052**

(71) Demandeur: **THALES**
**92400 Courbevoie (FR)**

(72) Inventeurs:
• **BROUSSARD, Elliot**
**92622 Gennevilliers Cedex (FR)**
• **PRIVAT, Eric**
**92622 Gennevilliers Cedex (FR)**
• **TOSONI, Laetitia**
**78100 Saint-Germain-en-Laye (FR)**

(74) Mandataire: **Marks & Clerk France**
**Immeuble "Visium"**
**22, avenue Aristide Briand**
**94117 Arcueil Cedex (FR)**

(54) **PROCÉDÉ D'ORIENTATION D'UNE ANTENNE SATELLITAIRE DISPOSÉE SUR UN PORTEUR**

(57) L'invention concerne un procédé de calcul d'une direction de pointage pour une antenne satellitaire (102) positionnée sur un porteur (100) comprenant une centrale de navigation (101) distante de l'antenne satellitaire, le procédé comprenant les étapes de :

- détermination (201) d'une première direction de pointage $\overrightarrow{V_{BO}}$, par une méthode géométrique en boucle ouverte,

- détermination (202) d'une deuxième direction de pointage $\overrightarrow{V_{EC}}$, par une méthode en boucle fermée basée sur une mesure d'erreur de pointage par écartométrie,

- calcul (203) d'une différence entre la première et la deuxième direction de pointage,

- détermination (204) d'une matrice de passage $M_{cos}$ entre la première et la deuxième direction de pointage telle que $\overrightarrow{V_{BO}} = M_{cos} \cdot \overrightarrow{V_{EC}}$,

- calcul (205) d'une direction de pointage optimale $\overrightarrow{V_{OPT}}$, par application de la matrice de passage sur la première direction de pointage $\overrightarrow{V_{BO}}$.

L'invention concerne également une station satcom configurée pour orienter une antenne satellitaire grâce au procédé selon l'invention.

FIG.2

**Description**

**Domaine technique** :

L'invention se situe dans le domaine des communications par satellite et porte plus particulièrement sur un procédé permettant le pointage précis de la ligne de visée d'une antenne satellitaire disposée sur un porteur mobile en direction d'un satellite.

**Technique antérieure** :

De par leurs hauts débits et le fait qu'elles ne nécessitent que peu d'infrastructures terrestres, les transmissions par satellite sont fréquemment utilisées pour les transmissions mises en œuvre depuis différents types de porteurs (aéronefs, navires, véhicules terrestres, etc...).

Le pointage précis de l'antenne satellitaire embarquée sur le porteur est primordial, puisqu'il permet d'assurer un débit de liaison maximal tout en limitant les interférences avec les transmissions des satellites voisins.

Différentes méthodes sont connues pour pointer l'antenne d'une station satcom (forme abrégée pour satellite de communications, une station satcom comprenant une antenne satcom, un dispositif de positionnement du faisceau l'antenne (balayage électronique ou axe mécanique), l'électronique embarquée permettant le contrôle du dispositif de positionnement, et éventuellement un modem) disposée sur le porteur en direction du satellite. Parmi ces méthodes de pointage, certaines sont dites en « boucle ouverte ». Les méthodes en boucle ouverte ne nécessitent pas d'échanges de données entre le satellite et la station satcom. D'autres méthodes sont dites en « boucle fermée », et impliquent l'utilisation d'un signal radio fréquence issu du satellite pour assurer le pointage.

Parmi les procédés en boucle fermée, il est connu d'estimer une erreur de pointage de l'antenne satellitaire par une mesure d'écartométrie (en anglais *Angle Error Estimation* ou *Angle Error Measurement),* et de déterminer la position de pointage idéale à partir de cette erreur de pointage. Ce procédé est spécifique aux systèmes de pointage d'antennes radiofréquence. La mesure d'écartométrie peut indifféremment être faite selon une technique de « *conical scan »,* de « *step tracking »,* de « *mono-pulse »,* ou toute autre technique connue de l'homme du métier. L'estimation de la direction de pointage basée sur une mesure d'écartométrie permet d'asservir la position de l'antenne par rapport à un signal image de la qualité du pointage, comme par exemple un signal balise transmis par le satellite ou des signaux transmis dans des canaux de communications, en mesurant un critère de qualité de la transmission et en orientant l'antenne de la station satcom de manière à maximiser la valeur de ce critère de qualité. Le critère de qualité est généralement une mesure de RSSI (sigle anglais pour *Received Signal Strength Indication,* ou indication de puissance du signal reçu) mais le procédé peut de manière équivalente être appliqué à partir de tout autre indicateur permettant de juger de la qualité du pointage, comme par exemple la mesure d'un rapport signal à bruit. Les procédés de pointage basés sur des mesures d'erreurs de pointage par écartométrie permettent de pointer l'antenne satellitaire avec une grande précision, mais ne fonctionnement pas lorsque les signaux permettant la mise en œuvre de la mesure d'écartométrie ne sont pas disponibles (masquage du satellite, brouillage de la communication, mauvaises conditions météorologiques, sortie momentanée de la station du réseau de communications, station satcom défavorisée du fait de sa position sur le globe, etc...). C'est pourquoi certaines applications préfèrent mettre en œuvre un procédé de pointage en boucle ouverte.

Contrairement aux procédés de pointage en boucle fermée, les procédés de pointage en boucle ouverte offrent une disponibilité constante. Ils consistent à positionner la ligne de visée de l'antenne de la station satcom par une approche géométrique prenant en considération la position du porteur, le cap et l'attitude du porteur, et la position orbitale du satellite. On entend par attitude l'orientation du porteur dans l'espace.

La position orbitale du satellite est connue par des éphémérides. La position, le cap et l'attitude du porteur sont fournies par une centrale de navigation, composée d'une centrale inertielle et généralement d'un récepteur GNSS (sigle anglais pour *Global Navigation Satellite System,* ou système de positionnement par satellites), le cas échéant complétés par des informations fournies par différents capteurs, comme par exemple, dans le cas d'un aéronef, des informations de vitesse fournie par des sondes prévues à cet effet, et/ou des informations d'altitude du porteur. La position du porteur est généralement dérivée des données de positionnement GNSS.

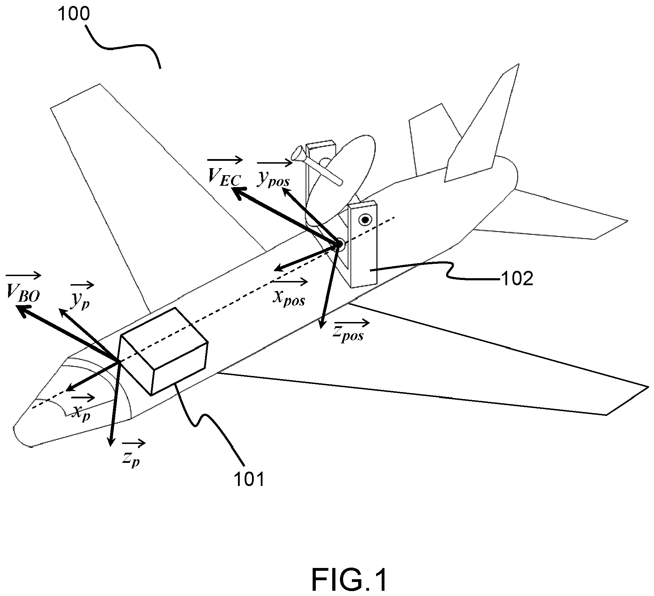

Cependant, comme représenté à la figure 1 dans le cadre d'un porteur aéroporté 100, la localisation de la station satcom 102 sur le porteur est généralement différente de la position de référence de la centrale de navigation 101.

Cet éloignement provoque une différence d'alignement entre le référentiel $(\overrightarrow{x_p}, \overrightarrow{y_p}, \overrightarrow{z_p})$ de la position délivrée par la centrale de navigation du porteur et le référentiel $(\overrightarrow{x_{pos}}, \overrightarrow{y_{pos}}, \overrightarrow{z_{pos}})$ du positionneur de la station satcom. De ce fait, un vecteur de pointage en boucle ouverte $\overrightarrow{V_{BO}}$ calculé dans le référentiel de la centrale de navigation ne correspond pas au vecteur de pointage optimal dans le référentiel de la station satcom, et cela quelle que soit la précision de la centrale de navigation. Or, la direction de pointage de l'antenne satellitaire doit être extrêmement précise. Par exemple, en bande Ka, la précision de pointage recherchée est de $\pm 0{,}1°$. Il est donc indispensable de compenser la différence d'alignement entre les deux référentiels puisque celle-ci entraine une erreur de pointage de l'antenne satellitaire de la station satcom.

Co-localiser l'antenne satcom et la centrale de navigation est contraignant et n'est généralement pas possible pour des raisons de place. A l'inverse, ajouter une centrale de navigation dédiée dans la station satcom se révèlerait particulièrement onéreux.

Une solution possible consiste à calibrer le système en mesurant l'écart entre la centrale de navigation et la station satcom, puis à compenser cette différence. Cette solution se heurte cependant au problème de précision de la mesure de l'erreur d'alignement, et ne permet pas de prendre en compte d'éventuelles déformations auxquelles se trouve confrontée la carlingue de l'aéronef durant le vol, qui viennent modifier le positionnement angulaire relatif entre la centrale de navigation et la station satcom, et donc la précision du pointage. Si ces déformations sont particulièrement marquées dans le cas d'un aéronef, elles existent également lorsque le porteur est un navire, et dans une moindre mesure lorsqu'il s'agit d'un véhicule terrestre. En outre, la mesure doit être refaite à chaque changement de position de la station satcom.

Le brevet Français FR 3.082.952 B1 décrit un procédé de calibration permettant d'estimer et de compenser l'écart entre le référentiel de la centrale de navigation et celle du système satcom sur un aéronef. Le procédé comprend une phase de calibration durant laquelle des mesures sont faites en orientant l'aéronef selon 8 positions différentes. Cependant, cette solution présente plusieurs défauts :

- la calibration est complexe et couteuse, et doit être refaite à chaque modification de la position de la station satcom,

- la calibration peut ne pas être possible pour certains porteurs pour des raisons de disponibilité du matériel,

- la calibration est faite au sol, où le poids de l'aéronef est réparti sur les roues. La répartition des contraintes exercées sur la carlingue diffèrent des contraintes exercées en vol, lorsque le poids de l'aéronef est réparti sur les ailes, modifiant de fait l'erreur d'alignement entre la station satcom et la centrale de navigation,

- le procédé ne prend pas en compte les variations de répartition de la masse de l'avion en fonction de ses missions et de son chargement, ni de la variation de répartition de la masse de l'aéronef au cours d'un vol, liée en particulier à la consommation de kérosène.

Des méthodes existent qui permettent d'estimer en temps réel l'erreur d'alignement entre une première centrale de navigation de précision élevée et une deuxième centrale de navigation de précision moindre pour des applications autres que les transmissions par satellite. Ces méthodes s'appuient sur des comparaisons de mesures de vitesse (en anglais *velocity matching),* d'attitude (en anglais *attitude matching),* ou les deux. Elles pourraient être appliquées dans une certaine mesure pour déterminer l'erreur d'alignement entre la centrale de navigation du porteur et la station satcom. Cependant, la comparaison de mesures de vitesse ne permet que d'estimer que deux des trois erreurs angulaires d'alignement lorsque le porteur n'exerce pas de changement de cap, et requiert la connaissance, par la station satcom, des informations de vitesse longitudinale du porteur. La comparaison de la mesure d'attitude requiert également un mouvement porteur pour permettre l'estimation des trois erreurs d'alignement.

Un objet de l'invention est donc de décrire un procédé de pointage de l'antenne satellitaire d'une station satcom qui s'affranchisse des problèmes de l'art antérieur, tout en restant simple à implémenter. A cet effet, le procédé décrit est basé sur une approche géométrique complétée par une approche basée sur la mesure de l'erreur de pointage par écartométrie, de manière à estimer en temps réel l'erreur d'alignement entre la centrale de navigation et l'antenne de la station satcom. Il présente en outre l'avantage de ne pas nécessiter de phase de calibration préalable, ce qui réduit les coûts de mise en œuvre et les temps d'intégration du système.

Résumé de l'invention :

A cet effet, la présente invention décrit un procédé de calcul d'une direction de pointage pour une antenne satellitaire positionnée sur un porteur comprenant une centrale de navigation distante de l'antenne satellitaire. Le procédé selon l'invention comprend les étapes de :

- détermination d'une première direction de pointage $\overrightarrow{V_{BO}}$, par une méthode géométrique en boucle ouverte impliquant une position du porteur, une attitude du porteur et une position d'un satellite, la position et l'attitude du porteur étant déterminés par ladite centrale de navigation (101),

- détermination d'une deuxième direction de pointage $\overrightarrow{V_{EC}}$, par une méthode en boucle fermée basée sur une mesure d'erreur de pointage par écartométrie mise en œuvre sur au moins un signal transmis par ledit satellite, ladite mesure d'erreur de pointage par écartométrie comprenant une mesure de la qualité de réception du signal transmis par le satellite,

- calcul d'une différence entre la première direction de pointage et la deuxième direction de pointage,

- détermination d'une matrice de passage $M_{cos}$ entre la première direction de pointage et la deuxième direction de pointage telle que $\overrightarrow{V_{BO}} = M_{cos}.\overrightarrow{V_{EC}}$, à partir de la différence calculée entre la première direction de pointage et la deuxième direction de pointage,

- calcul d'une direction de pointage optimale $\overrightarrow{V_{OPT}}$, par application de la matrice de passage sur la première direction de pointage V

Dans un mode de réalisation de l'invention, l'étape de détermination de la matrice de passage est mise en œuvre par la résolution d'un système linéaire d'équations avec un algorithme basé sur les moindres carrés. Dans un autre mode de réalisation, elle est mise en œuvre par la résolution d'un système linéaire d'équations avec un filtrage de Kalman.

Avantageusement, l'étape de détermination de la matrice de passage $M_{cos}$ peut également prendre en considération des mesures de déplacement longitudinal et/ou angulaire du porteur.

Dans un mode de réalisation de l'invention, la position du porteur utilisée pour déterminer la première direction de pointage $\overrightarrow{V_{BO}}$ est obtenue auprès d'un système de positionnement par satellites.

L'invention porte également sur un dispositif de transmissions satellitaires comprenant une antenne satellitaire, des moyens d'orientation de l'antenne satellitaire, des moyens de calcul. Les moyens de calcul sont configurés pour récupérer des informations de positionnement auprès d'une centrale de navigation, pour mettre en œuvre un procédé de calcul d'une direction de pointage selon l'invention, et pour utiliser la direction de pointage calculée afin d'orienter l'antenne satellitaire à travers les moyens d'orientation.

Avantageusement, le dispositif de transmissions satellitaires selon l'invention fonctionne dans une bande de fréquence parmi la bande X, la bande Ku et la bande Ka, pour lesquels une bonne précision de pointage est requise.

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :

- la figure 1 représente schématiquement les différents composants embarqués sur un porteur aéroporté, de manière à illustrer les problèmes d'alignement des directions de pointage de l'antenne satellite ;
- la figure 2 décrit les différentes étapes d'un procédé de pointage de l'antenne satellitaire d'une station satcom positionnée sur un porteur selon un mode de réalisation de l'invention.

**Description détaillée** :

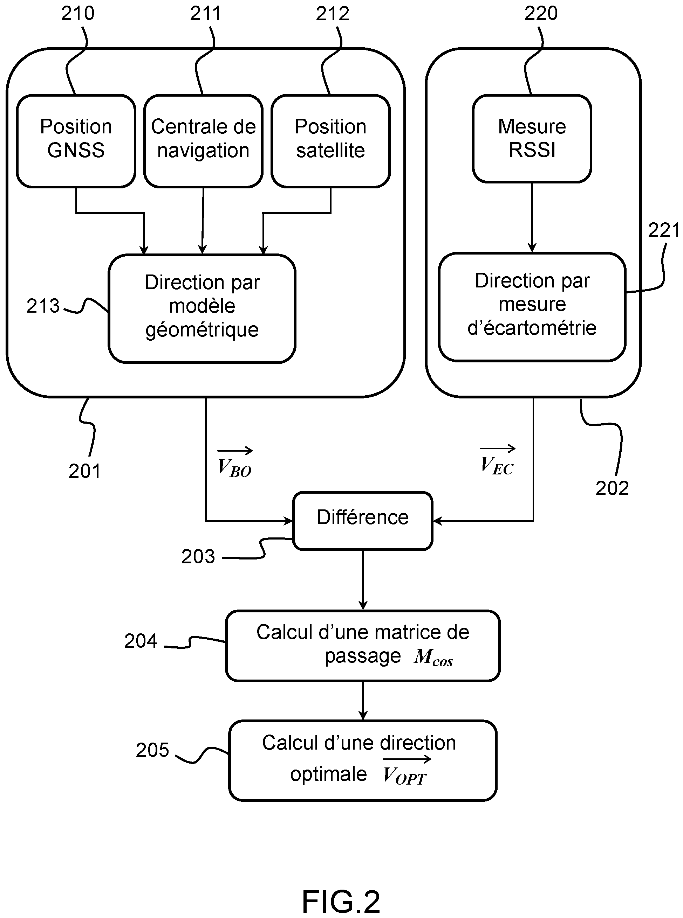

La figure 2 représente un mode de réalisation d'un procédé de calcul d'une direction de pointage pour une antenne satellitaire positionnée sur un porteur selon un premier mode de réalisation.

Le procédé selon l'invention comprend une étape 201 de calcul d'une première direction de pointage par la mise en œuvre d'un modèle géométrique. Ce calcul est connu de l'état de l'art, et consiste à utiliser des informations de position et d'attitude du porteur, ainsi que la position du satellite pour déterminer un vecteur $\overrightarrow{V_{BO}}$ pointant vers le satellite dans le référentiel $(\overrightarrow{x_p}, \overrightarrow{y_p}, \overrightarrow{z_p})$ du système de navigation. Ces informations permettent de calculer la direction du satellite 213 depuis le référentiel du porteur, et par conséquent l'orientation que doit prendre l'antenne de la station satcom dans ce référentiel. Comme indiqué précédemment, la position du porteur peut être fournie par un système de positionnement par satellite 210, l'attitude du porteur peut être fournie par une centrale de navigation 211, et la position du satellite peut être donnée par des éphémérides 212 ou connu par n'importe quel autre moyen.

Le procédé selon l'invention comprend une étape 202 de calcul d'une deuxième direction de pointage par la mise en œuvre d'une estimation d'erreur de pointage par écartométrie. Ce procédé connu de l'état de l'art consiste à déterminer une erreur de pointage par la mesure d'un critère de qualité 220 de la liaison satellitaire, tel qu'une mesure de RSSI, de C/N (rapport signal à bruit), ou de TEB (taux d'erreur bit) à partir d'un signal transmis par le satellite tel qu'un signal balise ou de signaux émis sur des canaux de communication. Un vecteur $\overrightarrow{V_{EC}}$ pointant vers le satellite dans le référentiel $(\overrightarrow{x_{pos}}, \overrightarrow{y_{pos}}, \overrightarrow{z_{pos}})$ de la station satcom peut être déterminé (221) à partir de cette mesure du critère de qualité.

La première étape 201 et la deuxième étape 202 du procédé selon l'invention sont réalisées simultanément et en temps réel.

Le procédé selon l'invention comprend une étape 203 de calcul d'une différence entre le vecteur de pointage $\overrightarrow{V_{BO}}$ et le vecteur de pointage $\overrightarrow{V_{EC}}$.

Le procédé selon l'invention comprend une étape 204 de détermination d'une matrice de passage $M_{cos}$ permettant de transposer la première direction de pointage $\overrightarrow{V_{BO}}$ dans le référentiel de la station satcom. Cette étape est réalisée à partir de la différence mesurée lors de la troisième étape 203. Cette différence est le fruit de l'erreur d'alignement entre le référentiel $(\overrightarrow{x_p}, \overrightarrow{y_p}, \overrightarrow{z_p})$ de la centrale de navigation du porteur et le référentiel $(\overrightarrow{xpos}, \overrightarrow{ypos}, \overrightarrow{zpos})$ de la station satcom, tel que $\overrightarrow{V_{BO}} = M_{cos} \cdot \overrightarrow{V_{EC}}$.

L'étape 204 consiste à déterminer trois angles $[\alpha, \beta, \gamma]^T$ définissant la matrice de passage $M_{cos}$ entre le référentiel $(\overrightarrow{x_p}, \overrightarrow{y_p}, \overrightarrow{z_p})$ de la station de navigation et le référentiel $(\overrightarrow{x_{pos}}, \overrightarrow{y_{pos}}, \overrightarrow{z_{pos}})$ de la station satcom. Les angles $\alpha$, $\beta$ et $\gamma$ étant petits, il est possible de poser $M_{cos}$ sous la forme :

$$M_{cos} = \begin{bmatrix} 1 & -\gamma & \beta \\ \gamma & 1 & -\alpha \\ -\beta & \alpha & 1 \end{bmatrix}.$$

$$\overrightarrow{V_{BO}} = \begin{bmatrix} x_{BO} \\ y_{BO} \\ z_{BO} \end{bmatrix} \quad \overrightarrow{V_{EC}} = \begin{bmatrix} x_{EC} \\ y_{EC} \\ z_{EC} \end{bmatrix}$$

En prenant $\quad$ et $\quad$, le calcul de la matrice de passage $M_{cos}$ peut alors être formulé comme un système linéaire d'équations :

$$\overrightarrow{V_{BO}} - \overrightarrow{V_{EC}} = \begin{bmatrix} 0 & z_{EC} & -y_{EC} \\ -z_{EC} & 0 & x_{EC} \\ y_{EC} & -x_{EC} & 0 \end{bmatrix} \cdot \begin{bmatrix} \alpha \\ \beta \\ \gamma \end{bmatrix} \qquad (1).$$

Ce système d'équations peut être résolu par un algorithme de moindres carrés, ou par un filtrage de Kalman.

L'algorithme des moindres carrés peut être récursif ou non, avec ou sans facteur d'oubli.

La mise en œuvre d'un filtrage de Kalman peut se faire à partir de l'équation (1), en posant :

$$\overrightarrow{V_{BO}} - \overrightarrow{V_{EC}} = y,$$

$$\begin{bmatrix} 0 & z_{ec} & -y_{EC} \\ -z_{ec} & 0 & x_{EC} \\ y_{EC} & -x_{EC} & 0 \end{bmatrix} = h,$$

$$\begin{bmatrix} \alpha \\ \beta \\ \gamma \end{bmatrix} = X,$$

en réalisant la phase de prédiction telle que :

$$\hat{X}_k^+ = A \cdot \hat{X}_k,$$

$$P_k^+ = A . P_k . A^T + Q$$

et la phase de correction telle que :

$$K_{k+1} = P_k^+ . h_{k+1}^T . \left( R_{k+1} + h_{k+1} . P_k^+ . h_{k+1}^T \right)^{-1}$$

$$P_{k+1} = (I - K_{k+1} . h_{k+1}) . P_k^+$$

$$\hat{X}_{k+1} = \hat{X}_k^+ + K_{k+1} . (y_{k+1} - h_{k+1} . \hat{X}_k^+)$$

avec :

- $\hat{X}_{k+1}$ l'estimation du vecteur d'état X à l'étape *k + 1,*
- $P_{k+1}$ la variance de l'estimateur P à l'étape k + 1,
- $h_{k+1}$ la matrice d'état *h* pour la mesure *k + 1,*
- $R_{k+1}$ la matrice de covariance du bruit de mesure pour la mesure k + 1, ce paramètre étant un paramètre de réglage permettant de quantifier l'incertitude et le bruit de mesure,
- *I* la matrice identité,
- $Y_{k+1}$ une nouvelle mesure de $\overrightarrow{V_{BO}}$ - $\overrightarrow{V_{EC}}$ ajoutée à l'étape k + 1,
- $\hat{X}_k^+$ la prédiction de l'estimation du vecteur d'état X à l'étape *k + 1,* basée sur l'estimation à l'étape k,
- *A* la matrice de propagation,
- $P_k^+$ la prédiction de la variance de l'estimateur P à l'étape k + 1, basée sur la variance $P_k$ mesurée à l'étape *k,*
- *Q* la matrice de covariance du bruit d'état, ce paramètre étant un paramètre de réglage permettant de quantifier la justesse du modèle, et
- $K_{k+1}$ le gain de Kalman à l'étape k + 1.

La mise en œuvre d'un algorithme des moindres carrés ou d'un filtrage de Kalman sur la mesure de la différence entre le vecteur de pointage $\overrightarrow{V_{BO}}$ dans le référentiel de la centrale de navigation et le vecteur de pointage $\overrightarrow{V_{EC}}$ dans le référentiel de la station satcom permet de diminuer l'erreur d'estimation liée notamment au bruit de mesure, en prenant en compte les mesures passées pour le calcul de la mesure instantanée de la matrice de passage $M_{cos}$.

Avantageusement, l'étape 204 de détermination de la matrice de passage $M_{cos}$ prend en compte des mesures supplémentaires fournies par la centrale de navigation, telles que par exemple des mesures de mouvements longitudinaux du porteur (accélération, vitesse ou position), ou des mesures de mouvements angulaires du porteur (attitude ou vitesse angulaire). Dans ce cas, le système d'équation (1) est complété par ces mesures supplémentaires, ce qui augmente encore la précision du calcul de la matrice de passage $M_{cos}$. En outre, en ajoutant des informations de mesure de mouvements longitudinaux du porteur au procédé selon l'invention, le problème de l'inobservabilité de l'erreur d'alignement en cap en l'absence de mouvement du porteur est résolu.

Enfin, le procédé de calcul d'une direction de pointage selon l'invention comprend une étape 205 de calcul d'une direction de pointage optimal, par application de la matrice de passage $M_{cos}$ à la direction de pointage en boucle ouverte $\overrightarrow{V_{BO}}$ calculée par la méthode géométrique. Le vecteur résultant $\overrightarrow{V_{OPT}} = M_{cos} \cdot \overrightarrow{V_{BO}}$ est utilisé pour pointer l'antenne de la station satcom en direction du satellite, soit par le calcul d'une erreur angulaire par rapport à la position de pointage courante afin de corriger la position d'un dispositif de pointage (mécanique ou électronique) de l'antenne satellite, soit en calculant une position à fournir à ce dispositif de pointage.

La direction de pointage $\overrightarrow{V_{OPT}}$ bénéficie de la précision de la direction de pointage des procédés de pointage en boucle fermée, sans problème de disponibilité en cas d'absence du signal transmis par le satellite. En effet, lorsque la station satcom n'est pas en mesure de recevoir de signal transmis par le satellite pour réaliser la mesure d'erreur de pointage par écartométrie, la dernière valeur calculée de matrice de passage $M_{cos}$ peut être utilisée pour calculer le vecteur $\overrightarrow{V_{OPT}}$ et pointer l'antenne satellite. Basé sur un procédé boucle ouverte utilisant une approche géométrique, il permet de prendre en compte en temps réel l'erreur d'alignement entre le référentiel de la centrale de navigation et le référentiel de l'antenne de la station satcom, mesurée de manière très précise grâce à l'estimation par la méthode des moindres carrés ou le filtrage de Kalman.

Le procédé de pointage selon l'invention, associant une méthode de pointage géométrique avec une méthode de mesure d'erreur de pointage par écartométrie répond à l'ensemble des problèmes posés par l'état de l'art :

- il ne nécessite pas de phase préliminaire de calibration de la station satcom, et est donc peu onéreux à mettre en œuvre, la différence d'alignement entre le référentiel de la centrale de navigation du porteur et le référentiel de la station satcom étant mesurée de manière très précise et en temps réel,

- il peut avantageusement tenir compte de mesures des mouvements longitudinaux ou angulaires du porteur,

- combiné avec des informations sur les mouvements longitudinaux du porteur, il est fonctionnel même lorsque le porteur immobile,

- il ne nécessite pas l'ajout d'équipements supplémentaires sur le porteur, ni de modifications de l'électronique du porteur pour être relié à différents équipements de mesure embarqués,

- il tient compte en temps réel des déformations subies par le porteur liées par exemple à des variations de la répartition des contraintes mécaniques qui s'exercent sur lui,

- il est disponible même en l'absence de signaux transmis par le satellite, en utilisant la dernière matrice de passage $M_{cos}$ lorsque le signal permettant la mesure d'erreur de pointage par écartométrie est indisponible,

- il présente une précision similaire aux procédés de pointage en boucle fermée, même lorsque le récepteur ne reçoit pas de signaux transmis par le satellite.

Il peut être mis en œuvre par un calculateur quelconque, par exemple un processeur, un DSP (sigle anglais pour *Digital Signal Processor,* ou processeur numérique de signal) ou un ASIC dédié (acronyme anglais pour *Application Specific Integrated Circuit,* ou circuit intégré propre à une application) embarqué dans le porteur.
De ce fait, l'invention porte également sur une station satcom comprenant des moyens de calcul configurés pour mettre en œuvre le procédé selon l'invention afin de calculer une direction de pointage optimale, et pour utiliser cette direction de pointage optimale afin d'orienter l'antenne satellite de la station satcom embarquée sur le porteur.
La station satcom selon l'invention peut fonctionner dans n'importe quelle bande de fréquence, en particulier dans les bandes de fréquences X, Ku et Ka, qui requièrent des précisions de pointage importantes.

**Revendications**

1. Procédé de calcul d'une direction de pointage pour une antenne satellitaire (102) positionnée sur un porteur (100) comprenant une centrale de navigation (101) distante de l'antenne satellitaire, le procédé étant **caractérisé en ce qu'**il comprend les étapes de :

   - détermination (201) d'une première direction de pointage $\overrightarrow{V_{BO}}$, par une méthode géométrique en boucle ouverte impliquant une position du porteur, une attitude du porteur et une position d'un satellite, la position et l'attitude du porteur étant déterminés par ladite centrale de navigation (101),
   - détermination (202) d'une deuxième direction de pointage $\overrightarrow{V_{EC}}$, par une méthode en boucle fermée basée sur une mesure d'erreur de pointage par écartométrie comprenant une mesure de la qualité de réception d'au moins un signal transmis par le satellite, et la détermination de la direction de pointage $\overrightarrow{V_{EC}}$ par rapport à ladite mesure de qualité de réception,
   - calcul (203) d'une différence entre la première direction de pointage et la deuxième direction de pointage,
   - détermination (204) d'une matrice de passage $M_{cos}$ entre la première direction de pointage et la deuxième direction de pointage telle que $\overrightarrow{V_{BO}} = M_{cos}.\overrightarrow{V_{EC}}$, à partir de la différence calculée entre la première direction de pointage et la deuxième direction de pointage,
   - calcul (205) d'une direction de pointage optimale $\overrightarrow{V_{OPT}}$, par application de la matrice de passage sur la première direction de pointage $\overrightarrow{V_{BO}}$.

2. Procédé de pointage d'une antenne satellitaire selon la revendication 1, dans lequel l'étape (204) de détermination de la matrice de passage est mise en œuvre par la résolution d'un système linéaire d'équations avec un algorithme basé sur les moindres carrés.

3. Procédé de pointage d'une antenne satellitaire selon la revendication 1, dans lequel l'étape (204) de détermination de la matrice de passage est mise en œuvre par la résolution d'un système linéaire d'équations avec un filtrage de Kalman.

4. Procédé de pointage d'une antenne satellitaire selon l'une des revendications précédentes, dans lequel l'étape (204) de détermination de la matrice de passage $M_{cos}$ prend en outre en considération des mesures de déplacement longitudinal et/ou angulaire du porteur.

5. Procédé de pointage d'une antenne satellitaire selon l'une des revendications précédentes, dans lequel la position du porteur utilisée pour déterminer (201) la première direction de pointage $\overrightarrow{V_{BO}}$ est obtenue auprès d'un système de positionnement par satellites.

6. Dispositif de transmissions satellitaires comprenant une antenne satellitaire, des moyens d'orientation de l'antenne satellitaire, des moyens de calcul, **caractérisé en ce que** les moyens de calcul sont configurés pour récupérer des informations de positionnement auprès d'une centrale de navigation, pour mettre en œuvre un procédé de calcul d'une direction de pointage selon l'une des revendications 1 à 5, et pour utiliser la direction de pointage calculée afin d'orienter l'antenne satellitaire à travers les moyens d'orientation.

7. Dispositif de pointage d'une antenne satellitaire selon la revendication 6 pour un dispositif de transmissions satellitaires fonctionnant dans une bande de fréquence parmi la bande X, la bande Ku et la bande Ka.

FIG.1

210　　　　211　　　　212　　　　　　　220

┌─────────────────────────────────────────┐　　┌──────────────────────┐
│  ┌──────────┐ ┌──────────┐ ┌──────────┐  │  │  ┌────────────┐      │
│  │ Position │ │Centrale de│ │ Position │  │  │  │  Mesure    │      │
│  │  GNSS    │ │navigation│ │ satellite│  │  │  │   RSSI     │      │
│  └──────────┘ └──────────┘ └──────────┘  │  │  └────────────┘      │  221
│                                          │  │                      │
│           ┌────────────────┐             │  │   ┌────────────┐     │
│  213      │  Direction par │             │  │   │Direction par│     │
│           │    modèle      │             │  │   │  mesure     │     │
│           │  géométrique   │             │  │   │d'écartométrie│    │
│           └────────────────┘             │  │   └────────────┘     │
└─────────────────────────────────────────┘  └──────────────────────┘

　　201　　　　　　　$\overrightarrow{V_{BO}}$　　　　　　　$\overrightarrow{V_{EC}}$　　　　　202

　　　　　　　　　　┌──────────────┐
　　　　　　　　　　│  Différence  │
　　　　　　203　　└──────────────┘

　　　　　　┌────────────────────────────┐
　　204　　│  Calcul d'une matrice de   │
　　　　　　│    passage  $M_{cos}$      │
　　　　　　└────────────────────────────┘

　　　　　　┌────────────────────────────┐
　　205　　│  Calcul d'une direction    │
　　　　　　│  optimale $\overrightarrow{V_{OPT}}$ │
　　　　　　└────────────────────────────┘

FIG.2

Europäisches
Patentamt

European
Patent Office

Office européen
des brevets

**RAPPORT DE RECHERCHE EUROPEENNE**

Numéro de la demande

**EP 21 21 7260**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BROUSSARD E ET AL: "Hybrid satellite position estmator using self-induced dither for SATCOM on the move", PREPRINTS OF THE 20TH WORLD CONGRESS THE INTERNATIONAL FEDERATION OF AUTOMATIC CONTROL, TOULOUSE , 9 juillet 2017 (2017-07-09), pages 7208-7212, XP002793338, Extrait de l'Internet: URL:https://hal.archives-ouvertes.fr/hal-0 1929571/document [extrait le 2019-08-01] | 1-3,6 | INV. H04B7/185 |
| Y | * Section 1 * <br> * Section 2 * <br> * Section 3 * <br> * Section 4 * <br> ----- | 4,5,7 | |
| Y | WO 2013/080183 A1 (APPLANIX CORP [CA]) 6 juin 2013 (2013-06-06) | 4,5 | |
| A | * "Aided INS"; pages 8-10 * <br> * "Tightly-Coupled Integration"; pages 11-13 * <br> ----- | 1-3,6,7 | DOMAINES TECHNIQUES RECHERCHES (IPC) |
| Y | COCO SALVATORE ET AL: "Accurate Estimation of Vehicle Attitude for Satellite Tracking in Ka Band SOTM", 2014 EUROPEAN MODELLING SYMPOSIUM, IEEE, 21 octobre 2014 (2014-10-21), pages 409-414, XP033173404, DOI: 10.1109/EMS.2014.57 | 7 | H04B |
| A | * Paragraphe I * <br> * Paragraphe II * <br> ----- <br> -/-- | 1-6 | |

Le présent rapport a été établi pour toutes les revendications

| Lieu de la recherche | Date d'achèvement de la recherche | Examinateur |
|---|---|---|
| La Haye | 6 mai 2022 | Wijting, Carl |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 21 21 7260

| | DOCUMENTS CONSIDERES COMME PERTINENTS | | | |
|---|---|---|---|---|
| Catégorie | Citation du document avec indication, en cas de besoin, des parties pertinentes | Revendication concernée | CLASSEMENT DE LA DEMANDE (IPC) | |
| A | US 2015/276413 A1 (HICKEY MARK [US] ET AL) 1 octobre 2015 (2015-10-01) * alinéas [0009] – [0016] * * alinéas [0088] – [0092] * * figure 1 * ----- | 1-7 | | |
| A | US 2012/265440 A1 (MORGAN KENNETH STEVEN [US]) 18 octobre 2012 (2012-10-18) * alinéas [0038] – [0041] * * alinéas [0042] – [0044] * * alinéas [0045], [0046] * * figures 3, 4, 5 * ----- | 1-7 | | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 6 mai 2022 | Wijting, Carl |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 21 21 7260

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-05-2022

| Document brevet cité au rapport de recherche | Date de publication | Membre(s) de la famille de brevet(s) | Date de publication |
|---|---|---|---|
| WO 2013080183 A1 | 06-06-2013 | AUCUN | |
| US 2015276413 A1 | 01-10-2015 | EP 2927640 A1<br>US 2015276413 A1 | 07-10-2015<br>01-10-2015 |
| US 2012265440 A1 | 18-10-2012 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3082952 B1